# EUROPEAN PATENT APPLICATION

(11) **EP 3 410 734 A1**
(43) Date of publication of application: **05.12.2018**
(21) Application number: 18174278.4
(22) Date of filing: 25.05.2018
(51) Int. Cl.: H04Q 9/00

(54) **TRANSMISSION CONTROL PROGRAM, TRANSMISSION CONTROL METHOD, AND INFORMATION PROCESSING DEVICE**

(30) Priority: 29.05.2017 JP 2017105626
(71) Applicant: FUJITSU LIMITED, Kawasaki-shi Kanagawa 211-8588 (JP)
(72) Inventor: MURAI, Ryota, Kanagawa, 211-8588 (JP)
(74) Representative: Hoffmann Eitle

(57) **Abstract**

A transmission control program that causes a computer to execute a process, the process including specifying, upon a reception of sensor data and identification information of a sensor having detected the sensor data, sensor data associated with the received identification information of the sensor by referring to a storage device storing sensor data acquired by another information processing device in association with identification information of a sensor having detected the stored sensor data, comparing the received sensor data with the specified sensor data, and determining whether to transmit the received sensor data based on a result of the comparing.

## Description

### FIELD

The embodiments discussed herein are related to a transmission control program, a transmission control method, and an information processing device.

### BACKGROUND

In sensing of environment data (for example, temperature, humidity, and atmospheric pressure) in Internet of Things (IoT), a sensor transmits sensor data (packets) by using a wireless communication technology such as Bluetooth (registered trademark) low energy (BLE). The sensor data is received and processed at a gateway in real time (refer to Japanese Laid-open Patent Publication No. 2015-188140, for example).

### SUMMARY

According to an aspect of the invention, a transmission control program that causes a computer to execute a process, the process including specifying, upon a reception of sensor data and identification information of a sensor having detected the sensor data, sensor data associated with the received identification information of the sensor by referring to a storage device storing sensor data acquired by another information processing device in association with identification information of a sensor having detected the stored sensor data, comparing the received sensor data with the specified sensor data, and determining whether to transmit the received sensor data based on a result of the comparing.

### BRIEF DESCRIPTION OF DRAWINGS

FIG. 1 is a diagram schematically illustrating the configuration of a sensor network system according to an embodiment;
FIG. 2 is a functional block diagram of a sensor;
FIG. 3 is a diagram illustrating exemplary output data;
FIG. 4 is a diagram illustrating an exemplary hardware configuration of a gateway device;
FIG. 5 is a functional block diagram of the gateway device;
FIG. 6 is a diagram illustrating an exemplary sensor data table;
FIG. 7 is a diagram illustrating an exemplary GW monitoring table;
FIG. 8 is a flowchart illustrating exemplary sensor data reception processing;
FIGs. 9A to 9C are diagrams for description of the processing illustrated in FIG. 8;
FIG. 10 is a flowchart illustrating exemplary change data transmission processing;
FIGs. 11A and 11B are diagrams for description of the processing illustrated in FIG. 10;
FIG. 12 is a flowchart illustrating exemplary change data collection processing;
FIGs. 13A to 13D are diagrams (1) for description of the processing illustrated in FIG. 12;
FIGs. 14A to 14C are diagrams (2) for description of the processing illustrated in FIG. 12;
FIGs. 15A and 15B are diagrams (3) for description of the processing illustrated in FIG. 12;
FIG. 16 is a flowchart illustrating exemplary gateway monitoring processing;
FIGs. 17A to 17C are diagrams (1) for description of the processing illustrated in FIG. 16;
FIGs. 18A and 18B are diagrams (2) for description of the processing illustrated in FIG. 16;
FIG. 19 is a flowchart illustrating exemplary sensor monitoring processing; and
FIG. 20 is a diagram illustrating an exemplary sensor monitoring table.

### DESCRIPTION OF EMBODIMENT

In the technology according to Japanese Laid-open Patent Publication No. 2015-188140, it is determined for each sensor in advance which gateway is in charge of transmission of sensor data detected by the sensor. With this configuration, each gateway transmits, to a collection server that collects the sensor data, all sensor data of a sensor that the gateway is in charge of transmission from. Accordingly, some gateways transmit a large amount of data.

One aspect of the present disclosure is intended to provide a transmission control program, a transmission control method, and an information processing device that achieve reduction of the amount of transmission data.

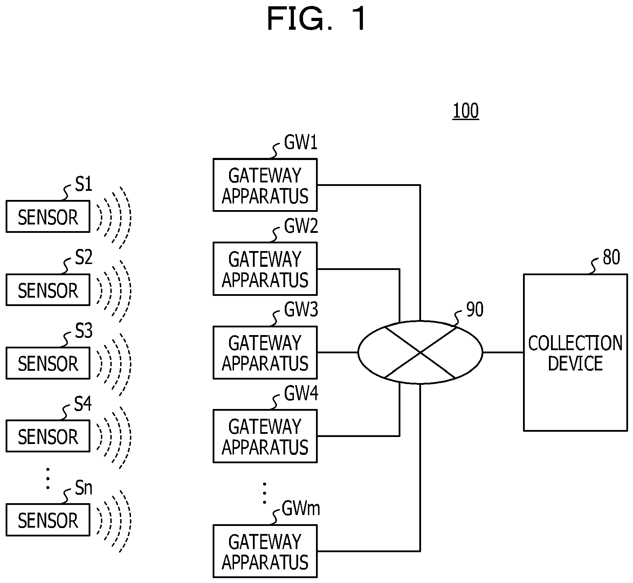

The following describes a sensor network system according to an embodiment in detail with reference to FIGs. 1 to 20.

FIG. 1 schematically illustrates the configuration of a sensor network system 100 according to an embodiment. As illustrated in FIG. 1, the sensor network system 100 includes n (n is an optional positive integer) sensors S1 to Sn, m (m is an optional positive integer) gateway devices GW1 to GWm as information processing devices, and a collection device 80. The gateway devices GW1 to GWm are each connected with the collection device 80 through a wired or wireless network 90 such as the Internet, a local area network (LAN), or a wide area network (WAN). The gateway devices GW1 to GWm are connected with each other through the network 90. In the following description, the gateway devices GW1 to GWm are referred to as gateway devices GW expect distinguishing from each other.

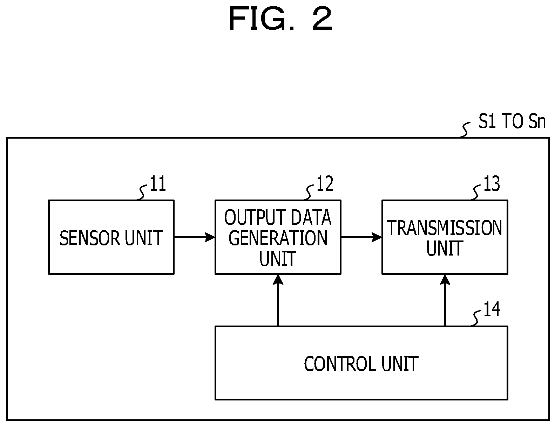

The sensors S1 to Sn broadcast detected sensor data without specified destinations. FIG. 2 illustrates a functional block diagram of each of the sensors S1 to Sn. As illustrated in FIG. 2, the sensors S1 to Sn each include a sensor unit 11, an output data generation unit 12, a transmission unit 13, and a control unit 14.

The sensor unit 11 detects sensor data (for example, temperature, humidity, and atmospheric pressure) at a predetermined interval (for example, 5 to 30 milliseconds), and outputs the sensor data to the output data generation unit 12. The output data generation unit 12 generates, under control of the control unit 14, output data including the sensor data detected by the sensor unit 11, and outputs the output data to the transmission unit 13.

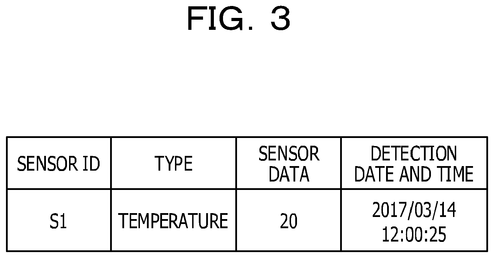

FIG. 3 is a diagram illustrating exemplary output data. As illustrated in FIG. 3, the output data includes, for example, the fields of "sensor ID", "type", "sensor data", and "detection date and time" as sensor identification information. The field of "sensor ID" stores, for example, an identifier for uniquely identifying any of the sensors S1 to Sn. The field of "type" stores the type of sensor data detected by the sensor unit 11 of any of the sensors S1 to Sn. For example, when temperature is detected by the sensor unit 11 of the sensor S1, the field of "type" stores "Temperature" as illustrated in FIG. 3. The field of "sensor data" stores, for example, a value of temperature detected by any of the sensors S1 to Sn. The field of "detection date and time" stores information on time at which sensor data is detected by the sensor unit 11.

As illustrated in FIG. 2, the transmission unit 13 broadcasts, under control of the control unit 14, output data (refer to FIG. 3) through wireless communication without specified destination. The broadcast output data is received by any gateway device GW capable of receiving the output data. The control unit 14 controls operation of each of the sensors S1 to Sn.

The collection device 80 is, for example, a cloud server or a storage device, and collects and manages sensor data detected by each of the sensors S1 to Sn.

The gateway devices GW1 to GWm receive and manage sensor data detected by the sensors S1 to Sn. Any one of the gateway devices GW1 to GWm functions as a master gateway device that receives and collects change data, which will be described later, from any other gateway device GW and transmits the change data to the collection device 80.

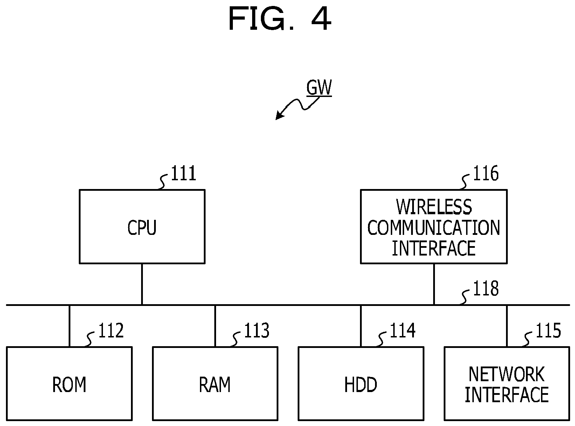

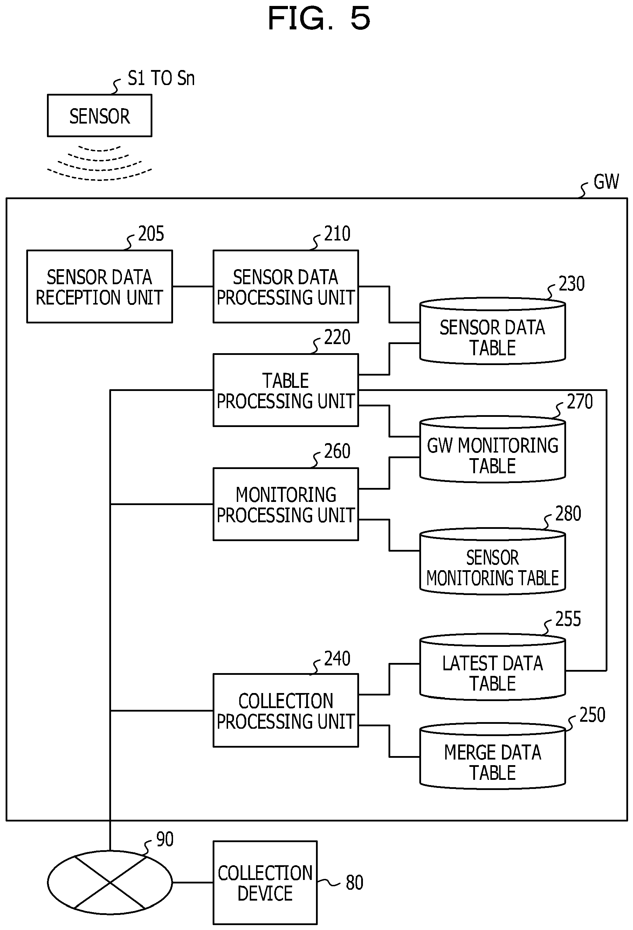

FIG. 4 is a diagram illustrating an exemplary hardware configuration of each gateway device GW. As illustrated in FIG. 4, the gateway device GW includes a central processing unit (CPU) 111 as a processor, a read only memory (ROM) 112, a random access memory (RAM) 113, a hard disk drive (HDD; storage device) 114, a network interface 115, and a wireless communication interface 116. These components of the gateway device GW are connected with a bus 118. The CPU 111 functions as each component of the gateway device GW illustrated in FIG. 5 by executing a computer program (including a transmission control program) stored in the ROM 112 or the HDD 114.

Specifically, as illustrated in FIG. 5, the CPU 111 executes a computer program to cause the gateway device GW to function as a sensor data reception unit 205, a sensor data processing unit 210, which is a specification unit and a comparison unit, a table processing unit 220, which is a determination unit, a monitoring processing unit 260, or a collection processing unit 240. In the present embodiment, although the gateway devices GW have identical configurations, the functions of the sensor data reception unit 205, the sensor data processing unit 210, and the table processing unit 220 are disabled in any gateway device GW that functions as the master gateway device. The function of the collection processing unit 240 is disabled in any gateway device GW other than the master gateway device.

The following describes the sensor data reception unit 205, the sensor data processing unit 210, and the table processing unit 220, which are enabled in any gateway device GW other than the master gateway device.

The sensor data reception unit 205 receives output data including sensor data and broadcast by the sensors S1 to Sn, and outputs the received output data to the sensor data processing unit 210.

The sensor data processing unit 210 updates a sensor data table 230 based on the output data received from the sensor data reception unit 205.

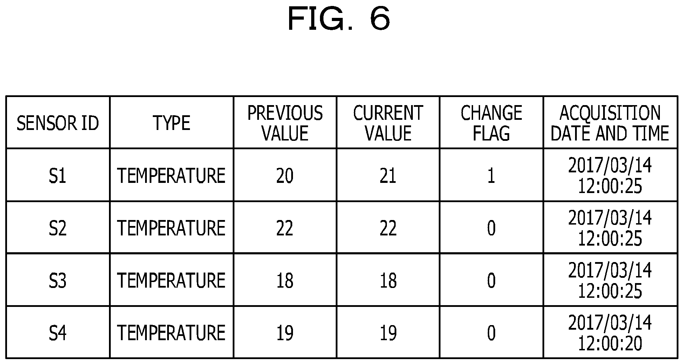

The following describes the sensor data table 230. The sensor data table 230 is a table that manages sensor data detected by the sensors S1 to Sn. FIG. 6 is a diagram illustrating an exemplary sensor data table 230. As illustrated in FIG. 6, the sensor data table 230 includes, for example, the fields of "sensor ID", "type", "previous value", "current value", "change flag", and "acquisition date and time".

Similarly to the field of "sensor ID" of output data (refer to FIG. 3), the field of "sensor ID" stores an identifier uniquely identifying a sensor. The field of "type" stores the type of sensor data detected by the sensor unit 11 of the sensor identified by a sensor ID. For example, the field of "type" stores "Temperature" when temperature is detected by the sensor unit 11, or stores "atmospheric pressure" when atmospheric pressure is detected by the sensor unit 11.

The field of "previous value" stores a value previously transmitted from the master gateway device to the collection device 80 as sensor data detected by the sensor identified by a sensor ID. The field of "current value" stores the value of "sensor data" included in output data received from any of the sensors S1 to Sn. The field of "change flag" stores "1" when the value stored in "current value" is different from the value stored in "previous value", or stores "0" when the values are equal to each other. The field of "acquisition date and time" stores the value of "detection time" included in the received output data. Each gateway device GW updates the sensor data table 230 based on the received output data, and thus sensor data of all sensors S1 to Sn is not necessarily registered to the sensor data table 230. For example, the gateway device GW1 is installed where output data may be received from the sensors S1 to S4 but not from any other sensor. In this case, as illustrated in FIG. 6, sensor data of the sensors S1 to S4 is registered to the sensor data table 230.

When having received a change data transmission request from any other gateway device GW, the table processing unit 220 extracts a record storing "1" in the field of "change flag" from the sensor data table 230, and generates change data (to be described later in detail). The table processing unit 220 transmits the generated change data to the gateway device GW from which the transmission request is received.

When having received a latest data table 255 from any other gateway device GW, the table processing unit 220 overwrites the sensor data table 230 and the latest data table 255 stored in the own device with the received latest data table 255. The latest data table 255 stores latest sensor data of the sensors S1 to Sn, which is transmitted from the master gateway device to the collection device 80, and includes items same as those of the sensor data table 230. The latest data table 255 will be described later in detail.

The following describes the collection processing unit 240 enabled in the gateway device GW functioning as the master gateway device.

The collection processing unit 240 transmits, to any other gateway device GW, a request to transmit change data, and collects the transmitted change data. The collection processing unit 240 updates a merge data table 250 based on the collected data. The collection processing unit 240 produces, based on the merge data table 250, transmission data including sensor data of the sensors S1 to Sn, and transmits the transmission data to the collection device 80. The collection processing unit 240 updates the latest data table 255 based on the merge data table 250, and distributes the contents of the updated latest data table 255 to any other gateway device GW.

The following describes the monitoring processing unit 260 enabled in each gateway device GW.

The monitoring processing unit 260 transmits an internet control message protocol (ICMP) echo request to any other gateway device GW, and updates a GW monitoring table 270 based on a result of the request.

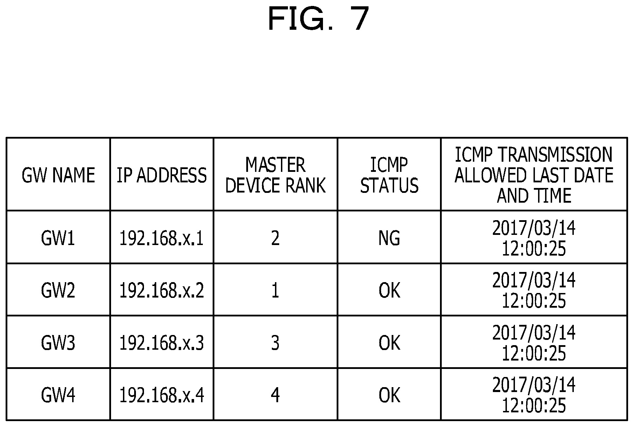

The GW monitoring table 270 manages the status of each gateway device GW. FIG. 7 is a diagram illustrating an exemplary GW monitoring table 270. As illustrated in FIG. 7, the GW monitoring table 270 includes, for example, the fields of "GW name", "IP address", "master device rank", "ICMP status", and "ICMP transmission allowed last date and time".

The field of "GW name" stores the name of any gateway device GW. The field of "GW name" may store an identifier for identifying the gateway device GW. The field of "IP address" stores information on an IP address allocated to the gateway device GW. The field of "master device rank" stores a priority rank when the gateway device GW functions as the master gateway device. Any gateway device GW for which the field of "master device rank" stores "1" functions as the master gateway device.

The field of "ICMP status" stores a result obtained when the ICMP echo request is transmitted to any other gateway device GW. The value of "OK" stored in the field of "ICMP status" indicates that a response to the ICMP echo request is obtained, and the value of "NG" stored in the field of "ICMP status" indicates that no response to the ICMP echo request is obtained. The field of "ICMP transmission allowed last date and time" stores date and time at which a last response to the ICMP echo request is confirmed.

Having updated the GW monitoring table 270, the monitoring processing unit 260 distributes the updated GW monitoring table 270 to the other gateway devices GW. When having received the GW monitoring table 270 from any other gateway device GW, the monitoring processing unit 260 overwrites the GW monitoring table 270 stored in the own device with the received GW monitoring table 270. In this manner, the gateway devices GW monitor each other, thereby sharing the status of each gateway device GW in the sensor network system 100.

The monitoring processing unit 260 of the gateway device GW functioning as the master gateway device monitors the states of the sensors S1 to Sn and updates, based on a result of the monitoring, a sensor monitoring table 280 that records the state of each sensor (to be described later in detail). The monitoring processing unit 260 distributes the updated sensor monitoring table 280 to the other gateway devices GW. The monitoring processing unit 260 of the gateway device GW having received the sensor monitoring table 280 distributed by the master gateway device overwrites the sensor monitoring table 280 stored in the own device with the received sensor monitoring table 280.

The following describes processing executed in the sensor network system 100 in detail. The following description will be made on an example in which the sensor network system 100 includes the gateway devices GW1 to GW4 and the sensors S1 to S4, and the gateway device GW2 among the gateway devices GW1 to GW4 functions as the master gateway device.

### (Sensor data reception processing)

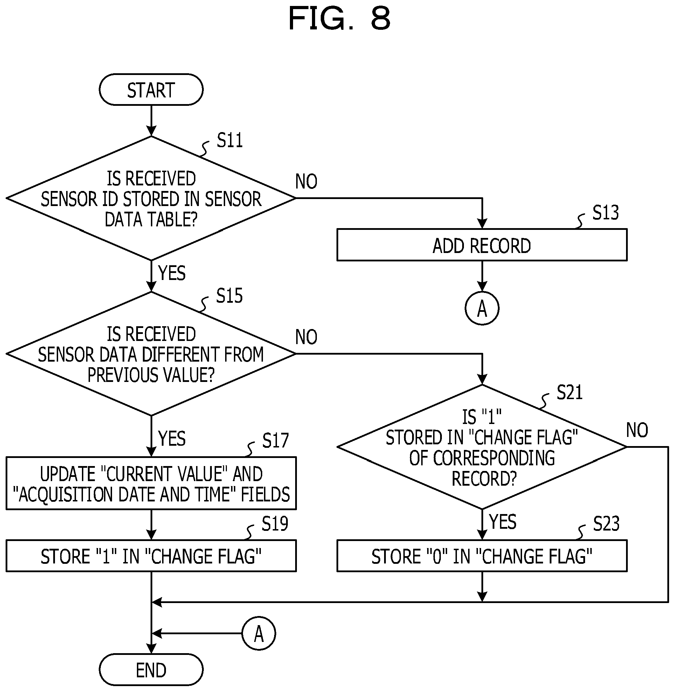

The following describes exemplary sensor data reception processing executed by the sensor data processing unit 210 of each gateway device (GW1, GW3, or GW4) other than the master gateway device (GW2). FIG. 8 is a flowchart illustrating this exemplary sensor data reception processing. The processing illustrated in FIG. 8 is executed each time the sensor data reception unit 205 receives output data broadcast by the sensors S1 to S4.

When the processing illustrated in FIG. 8 is started, the sensor data processing unit 210 determines whether a sensor ID (received sensor ID) included in received output data (refer to FIG. 3) is stored in the sensor data table 230 (refer to FIG. 6) (step S11).

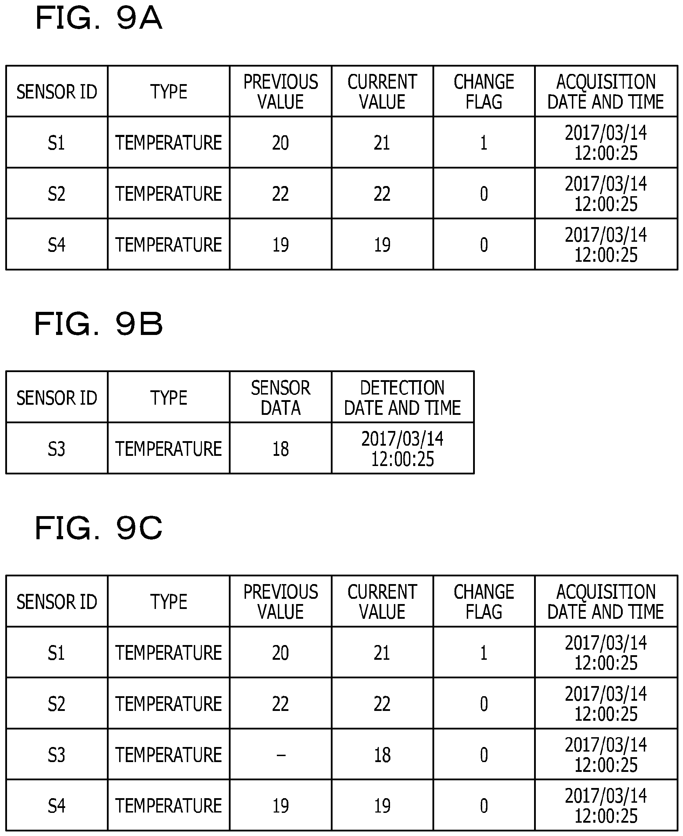

When the received sensor ID is not stored in the sensor data table 230 (NO at step S11), the sensor data processing unit 210 adds a record to the sensor data table 230 (step S13). In this case, the sensor data processing unit 210 updates any field other than the field of "previous value" of the added record based on the received output data. Specifically, the value of "sensor ID" in the output data is stored in the field of "sensor ID", the value of "sensor data" is stored in the field of "current value", "0" is stored in the field of "change flag", and the value of "detection date and time" is stored in the field of "acquisition date and time". For example, the gateway device GW1 stores the sensor data table 230 illustrated in FIG. 9A, and the sensor data reception unit 205 thereof receives the output data illustrated in FIG. 9B. In this case, the received sensor ID "S3" is not stored in the sensor data table 230 illustrated in FIG. 9A, and thus the sensor data processing unit 210 adds a record having the sensor ID "S3" to the sensor data table 230 as illustrated in FIG. 9C.

When the processing at step S13 ends, the sensor data processing unit 210 ends the processing illustrated in FIG. 8.

In FIG. 8, when the received sensor ID is stored in the sensor data table 230 (YES at step S11), the sensor data processing unit 210 determines whether sensor data (received sensor data) of the received output data is different from a value stored in the field of "previous value" for the sensor ID (step S15).

When the received sensor data is different from the value stored in the field of "previous value" (YES at step S15), the sensor data processing unit 210 updates the fields of "current value" and "acquisition date and time" for the sensor ID (step S17). Specifically, the sensor data processing unit 210 stores the value of "sensor data" of the output data in the field of "current value", and stores the value of "detection date and time" of the output data in the field of "acquisition date and time".

Subsequently, the sensor data processing unit 210 stores "1" in the field of "change flag" in the sensor data table 230 (step S19), and ends the processing illustrated in FIG. 8.

When the received sensor data is identical to the value stored in the field of "previous value" (NO at step S15), the sensor data processing unit 210 determines whether "1" is stored in the field of "change flag" of the corresponding record (step S21).

When "1" is stored in the field of "change flag" of the corresponding record (YES at step S21), the sensor data processing unit 210 stores "0" in the field of "change flag" (step S23), and ends the processing illustrated in FIG. 8.

When "1" is not stored in the field of "change flag" of the corresponding record (NO at step S21), the sensor data processing unit 210 ends the processing illustrated in FIG. 8 without performing the processing at step S23.

### (Change data transmission processing)

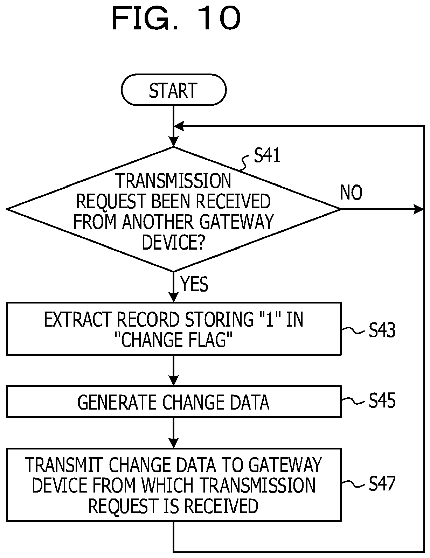

The following describes change data transmission processing executed by the table processing unit 220 of each gateway device (GW1, GW3, or GW4) other than the master gateway device (GW2). FIG. 10 is a flowchart illustrating exemplary change data transmission processing. The processing illustrated in FIG. 10 is constantly executed.

First, the table processing unit 220 determines whether the change data transmission request has been received from another gateway device (GW2) (step S41).

When the change data transmission request has not been received from another gateway device (GW2) (NO at step S41), the table processing unit 220 repeats the determination at step S41 until the change data transmission request is received from the other gateway device GW.

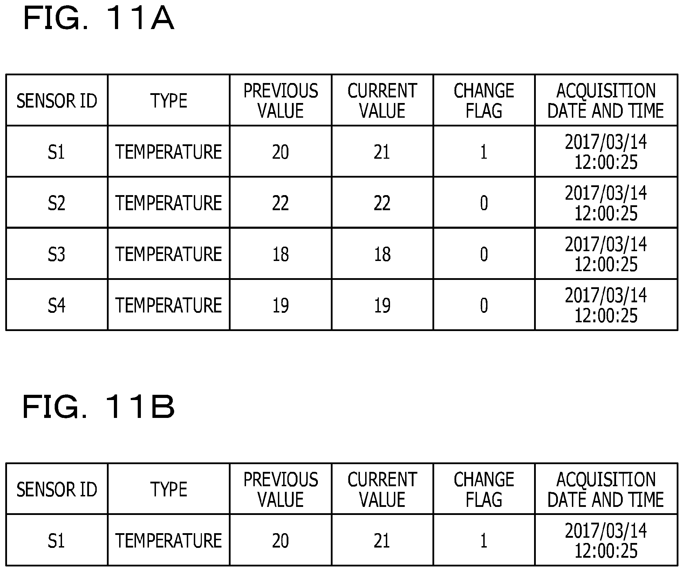

When the change data transmission request has been received from the other gateway device GW (YES at step S41), the table processing unit 220 extracts a record storing "1" in the field of "change flag" from the sensor data table 230 (step S43). For example, in the sensor data table 230 illustrated in FIG. 11A, "1" is stored in the field of "change flag" in a record having the "sensor ID" of "S1". Thus, in this case, the table processing unit 220 extracts the record having the "sensor ID" of "S1".

Subsequently, the table processing unit 220 generates change data including the extracted record (step S45). For example, the table processing unit 220 generates change data including the extracted record as illustrated in FIG. 11B. Fields included in the change data are same as those of the sensor data table 230, and thus description thereof will be omitted.

Subsequently, the table processing unit 220 transmits the generated change data to the gateway device GW from which the change data transmission request is received (step S47), and returns to step S41. Through the above-described processing, the table processing unit 220 transmits sensor data, the value of which has changed from sensor data (previous value) previously transmitted to the collection device 80, but does not transmit sensor data, the value of which remains the same. This configuration leads to reduction of the amount of transmission data.

### (Change data collection processing)

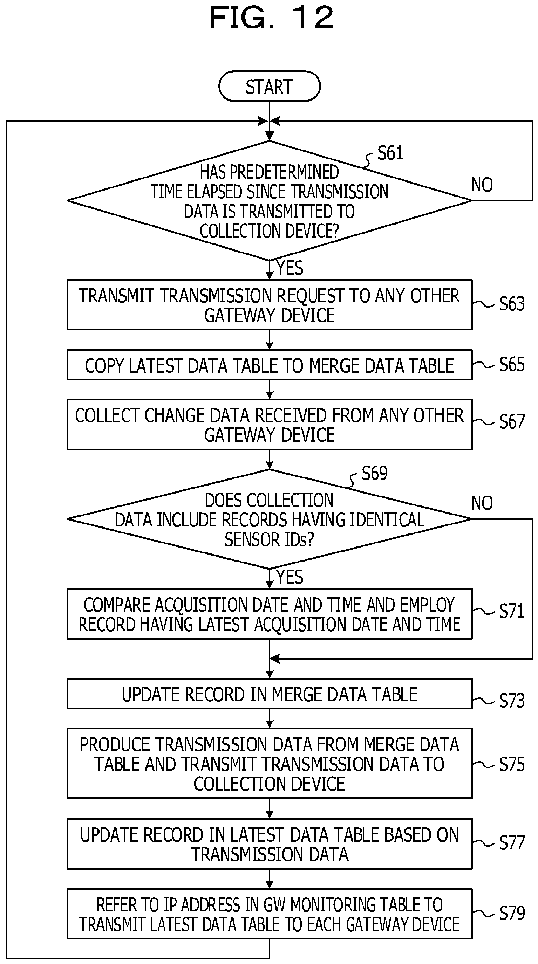

The following describes change data collection processing executed by the collection processing unit 240 of the master gateway device (GW2). FIG. 12 is a flowchart illustrating exemplary change data collection processing. The processing illustrated in FIG. 12 is constantly executed.

First in the processing illustrated in FIG. 12, the collection processing unit 240 determines whether a predetermined time has elapsed since transmission data (to be described later in detail) is transmitted to the collection device 80 (step S61).

When the predetermined time has not elapsed since transmission data is transmitted to the collection device 80 (NO at step S61), the collection processing unit 240 repeats the determination at step S61 until the predetermined time elapses. When the predetermined time has elapsed (YES at step S61), the collection processing unit 240 transmits the change data transmission request to any other gateway device (GW1, GW3, or GW4) (step S63).

Subsequently, the table processing unit 220 copies the latest data table 255 to the merge data table 250 (step S65). As described above, the latest data table 255 stores latest sensor data of the sensors S1 to Sn transmitted from the master gateway device (GW2) to the collection device 80, and thus has fields identical to those of the sensor data table. The merge data table 250 has fields identical to those of the latest data table 255 and stores data from which data to be transmitted to the collection device 80 is produced.

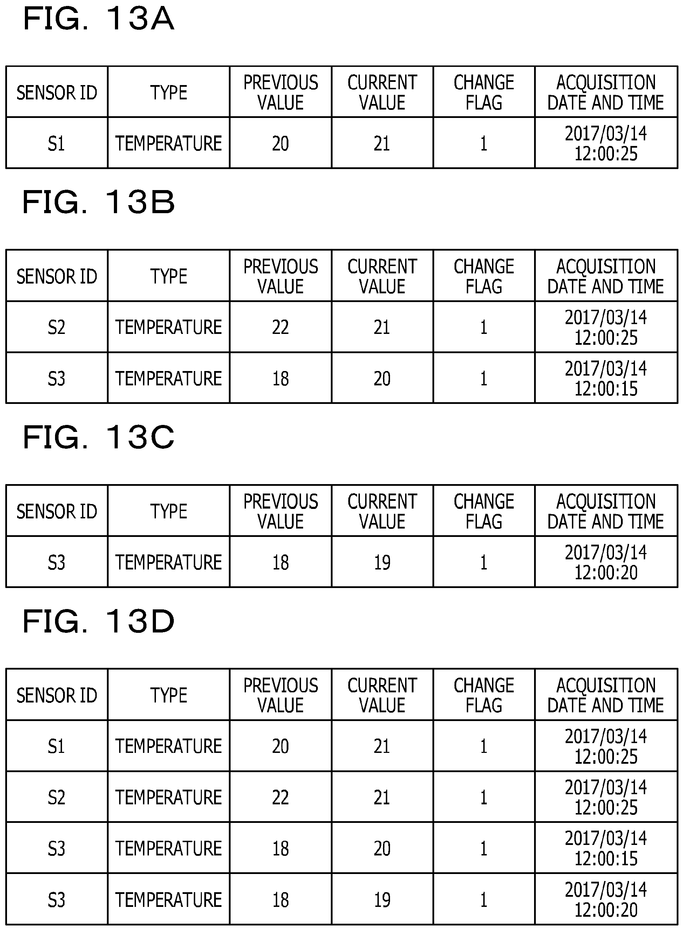

As illustrated in FIG. 12, the table processing unit 220 collects change data received from any other gateway device (GW1, GW3, or GW4) (step S67). For example, the gateway device GW2 receives change data illustrated in FIGs. 13A to 13C from the gateway devices GW1, GW3, and GW4, respectively. In this case, the table processing unit 220 of the gateway device GW2 produces, for example, collection data (FIG. 13D) as collection of the change data illustrated in FIGs. 13A to 13C.

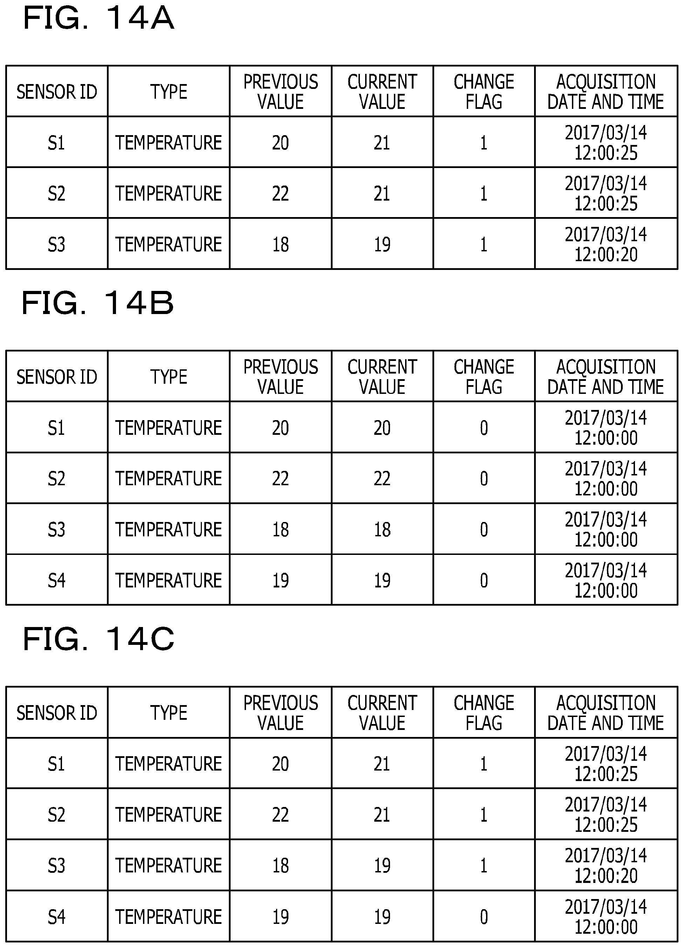

As illustrated in FIG. 12, the table processing unit 220 determines whether the collection data includes records having identical sensor IDs (step S69). When the collection data includes records having identical sensor IDs (YES at step S69), the table processing unit 220 compares "acquisition date and time" between the records having identical sensor IDs, and employs a record having latest "acquisition date and time" among the records having identical sensor IDs (step S71). Specifically, for example, the table processing unit 220 deletes, from the collection data, any record other than a record having latest acquisition date and time. For example, the collection data illustrated in FIG. 13D includes two records having the sensor ID "S3". In this case, the table processing unit 220 employs a record on the fourth row having latest acquisition date and time, and deletes a record on the third row from the collection data (refer to FIG. 14A).

As illustrated in FIG. 12, when the collection data includes no records having identical sensor IDs (NO at step S69) or after the processing at step S71, the table processing unit 220 updates any record in the merge data table 250 based on the collection data (step S73). For example, when the merge data table 250 illustrated in FIG. 14B is produced at step S65, the table processing unit 220 updates records having the sensor IDs "S1" to "S3" by overwriting the records with records in the collection data in FIG. 14A, thereby obtaining the merge data table 250 illustrated in FIG. 14C.

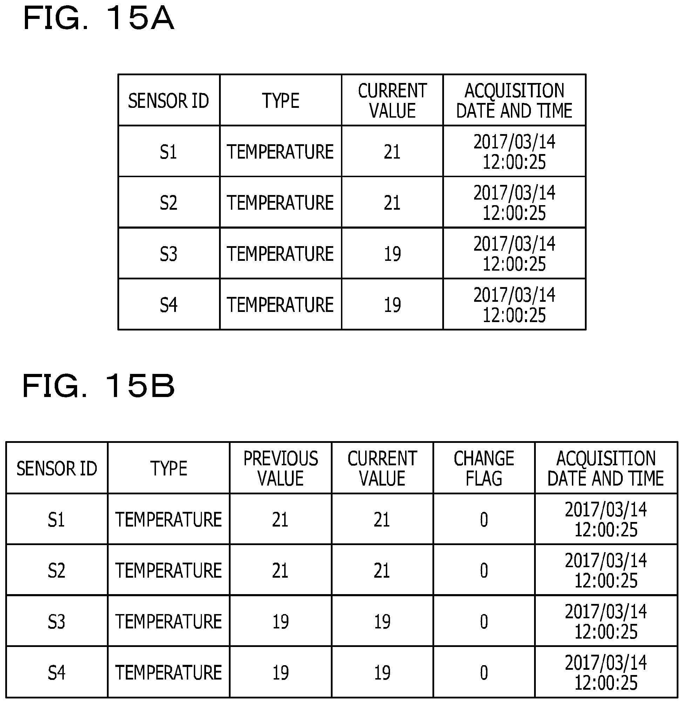

As illustrated FIG. 12, the table processing unit 220 produces, from the merge data table 250, transmission data to be transmitted to the collection device 80, and transmits the transmission data to the collection device 80 (step S75). Specifically, as illustrated in FIG. 15A, the table processing unit 220 extracts desirable information (in FIG. 15A, sensor ID, type, and current value) from the merge data table 250 and stores the information in relevant fields of the transmission data. The table processing unit 220 stores transmission time of the transmission data in the field of "acquisition date and time" in the transmission data.

As illustrated FIG. 12, the table processing unit 220 updates any record in the latest data table 255 based on the transmission data (step S77). Specifically, for each sensor in the latest data table 255, the table processing unit 220 stores "current value" of the transmission data in the fields of "previous value" and "current value", stores "0" in the field of "change flag", and stores the transmission time of the transmission data in the field of "acquisition date and time". For example, the latest data table 255 illustrated FIG. 15B is obtained when the transmission data illustrated in FIG. 15A is transmitted to the collection device 80.

As illustrated FIG. 12, the table processing unit 220 refers to "IP address" in the GW monitoring table 270 (refer to FIG. 7) to transmit the latest data table 255 to each gateway device (GW1, GW3, or GW4) (step S79), and then returns to step S61.

The table processing unit 220 of any gateway device (GW1, GW3, or GW4) having received the latest data table 255 from another gateway device (GW2) overwrites the latest data table 255 and the sensor data table 230 stored in the own device with the received latest data table 255. Accordingly, the gateway device (GW1, GW3, or GW4) compares the latest sensor data of the sensors S1 to Sn with sensor data detected by the sensors S1 to Sn, and determines whether to transmit the detected sensor data to the master gateway device (GW2).

### (Gateway monitoring processing)

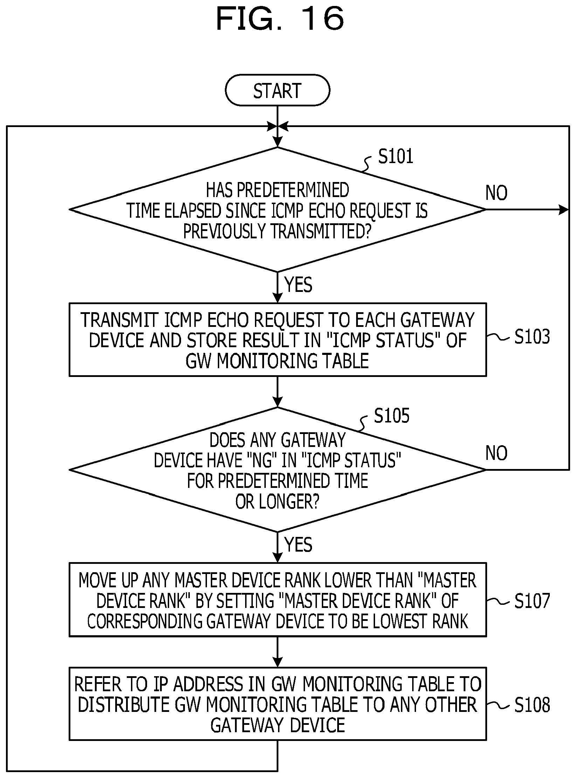

The following describes gateway monitoring processing executed by the monitoring processing unit 260 of each gateway devices GW1 to GW4. FIG. 16 is a flowchart illustrating exemplary gateway monitoring processing executed by the monitoring processing unit 260. The processing illustrated in FIG. 16 is constantly executed.

The monitoring processing unit 260 determines whether a predetermined time has elapsed since the ICMP echo request is previously transmitted to any other gateway device GW (step S101). When the predetermined time has not elapsed (NO at step S101), the monitoring processing unit 260 repeats the determination at step S101 until the predetermined time elapses.

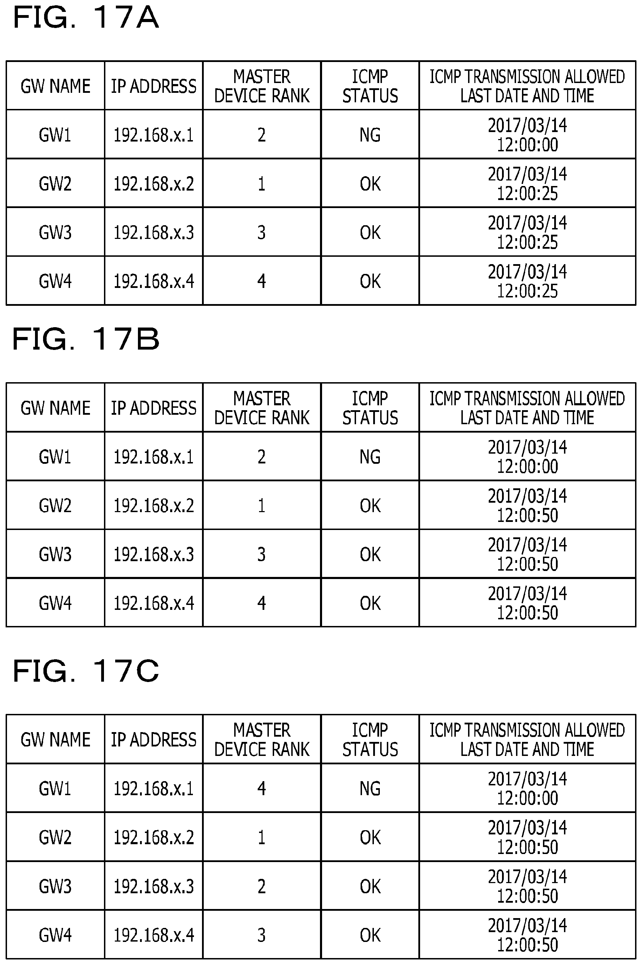

When the predetermined time has elapsed (YES at step S101), the monitoring processing unit 260 transmits the ICMP echo request to each gateway device GW, and stores each result of the request in the field of "ICMP status" of the GW monitoring table 270 (step S103). For example, when the monitoring processing unit 260 of the gateway device GW2 transmits the ICMP echo request to the gateway device GW1, a response to the ICMP echo request is obtained at 12:00:00 on March 14, 2017, but no response to the ICMP echo request is obtained at 12:00:25 on March 14, 2017. In this case, as illustrated in FIG. 17A, the monitoring processing unit 260 of the gateway device GW2 stores "NG" in the field of "ICMP status" for the gateway device GW1 in the GW monitoring table 270.

Subsequently, the monitoring processing unit 260 determines whether, in the GW monitoring table 270, any gateway device GW has "NG" in the field of "ICMP status" for a predetermined time or longer (step S105).

When no gateway device GW has "NG" in the field of "ICMP status" for the predetermined time or longer (NO at step S105), the monitoring processing unit 260 returns to step S101.

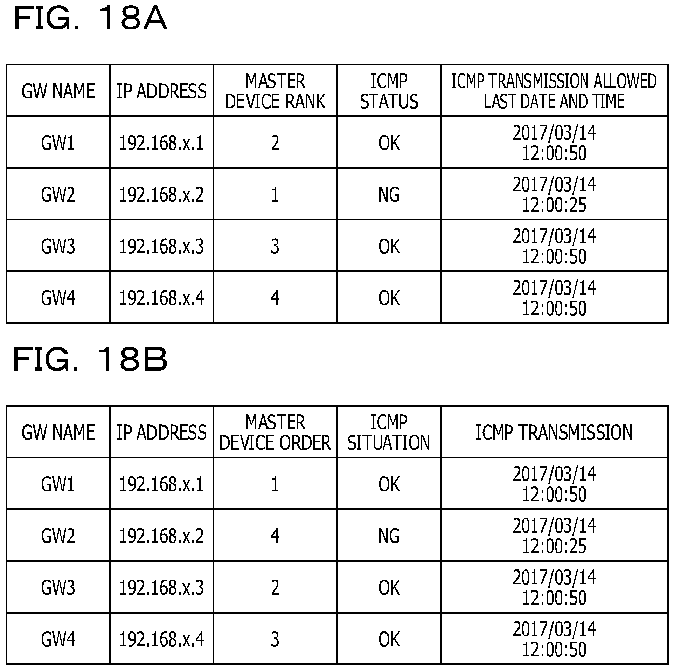

When any gateway device GW has "NG" in the field of "ICMP status" for the predetermined time or longer (YES at step S105), the monitoring processing unit 260 moves up, in the GW monitoring table 270, any master device rank lower than the "master device rank" of the gateway device GW by setting the "master device rank" of the corresponding gateway device GW to be the lowest rank (step S107). For example, comparison between FIGs. 17A and 17B indicates that "NG" is stored in the field of "ICMP status" for the gateway device GW1 for, for example, 30 seconds or longer. In this case, the monitoring processing unit 260 moves up "3" and "4", which are master device ranks lower than the "master device rank" of the gateway device GW1, by one rank by changing the "master device rank" of the gateway device GW1 from "2" to "4", which is the lowest rank. As a result, as illustrated in FIG. 17C, the gateway device GW3 has the master device rank of "2", and the gateway device GW4 has the master device rank of "3". For example, as illustrated in FIG. 18A, in the GW monitoring table 270 of the gateway device GW1, "NG" is stored in the field of "ICMP status" for the gateway device GW2 having the "master device rank" of "1", in other words, functioning as the master gateway device, for a predetermined time (for example, 20 seconds) or longer. In this case, the monitoring processing unit 260 of the gateway device GW1 moves up the lower master device ranks of "2" to "4" by one rank by changing the "master device rank" of the gateway device GW2 from "1" to the lowest rank of "4". As a result, as illustrated in FIG. 18B, the gateway device GW1 has the master device rank of "1" and functions as the master gateway device. Since each gateway device GW performs the gateway monitoring processing in this manner, the master gateway device may be automatically switched when failure has occurred to the master gateway device.

As illustrated FIG. 16, the monitoring processing unit 260 refers to "IP address" in the GW monitoring table 270 to distribute the GW monitoring table 270 to any other gateway device GW (step S108), and returns to step S101.

The monitoring processing unit 260 of the gateway device GW having received the GW monitoring table 270 from any other gateway device GW overwrites the GW monitoring table 270 stored in the own device with the received GW monitoring table 270. Accordingly, the current status of each gateway device GW is shared among all gateway devices GW.

### (Sensor monitoring processing)

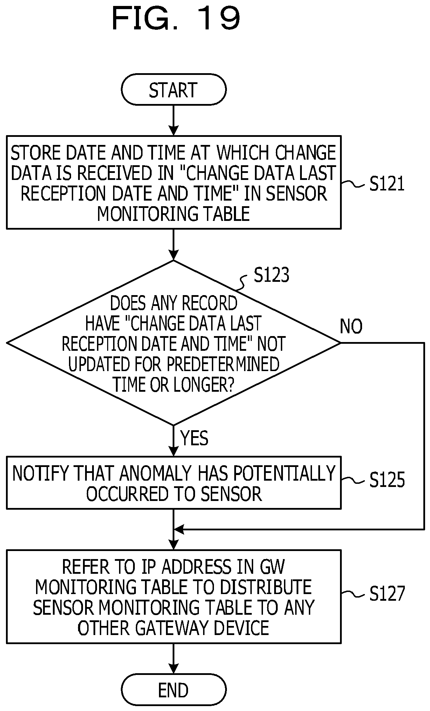

The following describes sensor monitoring processing executed by the monitoring processing unit 260 of the master gateway device (GW2). FIG. 19 is a flowchart illustrating exemplary sensor monitoring processing. The processing illustrated in FIG. 19 is executed each time the collection processing unit 240 of the master gateway device GW2 receives change data.

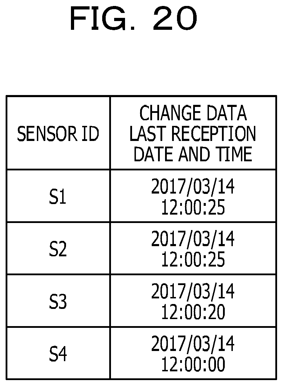

First in the processing illustrated in FIG. 19, in the sensor monitoring table 280, the monitoring processing unit 260 stores date and time at which the change data is received in the field of "change data last reception date and time" for a sensor ID included in the change data (step S121). As illustrated in FIG. 20, the sensor monitoring table 280 includes the fields of "sensor ID" and "change data last reception date and time". The field of "sensor ID" stores identification information of any of the sensors S1 to Sn included in the sensor network system 100. The field of "change data last reception date and time" stores last date and time at which change data of the sensor identified by a sensor ID is received.

Subsequently, the monitoring processing unit 260 determines whether any record in the sensor monitoring table 280 has "change data last reception date and time" not updated for a predetermined time or longer (step S123). When "change data last reception date and time" is not updated for the predetermined time or longer, sensor data detected by the sensor unit 11 has no change potentially because anomaly has occurred to the sensor. Alternatively, output data transmitted from the sensor is not received by the gateway device GW potentially because a screening object such as an iron plate is installed in the circumference of the sensor. Thus, in the present step, whether anomaly has potentially occurred to the sensor or the circumference of the sensor is determined based on whether "change data last reception date and time" is not updated for the predetermined time or longer.

When any record has "change data last reception date and time" not updated for the predetermined time or longer (YES at step S123), the monitoring processing unit 260 notifies that anomaly has potentially occurred to the sensor corresponding to the record (step S125). For example, the monitoring processing unit 260 transmits, to the collection device 80, notification including the sensor ID of a sensor to which anomaly has potentially occurred. Alternatively, the monitoring processing unit 260 causes a display device (not illustrated) to display a message notifying that anomaly has potentially occurred to the sensor. For example, in FIG. 20, the change data last reception time is not updated for 25 seconds or longer in a record having the sensor ID "S4". In this case, for example, the monitoring processing unit 260 notifies that anomaly has potentially occurred to the sensor having the sensor ID "S4".

As illustrated FIG. 19, after the processing at step S125 or when no record has "change data last reception date and time" not updated for the predetermined time or longer (NO at step S123), the monitoring processing unit 260 refers to "IP address" in the GW monitoring table 270 (step S127) to distribute the sensor monitoring table 280 to any other gateway device (GW1, GW3, or GW4), and ends the processing illustrated in FIG. 19.

The monitoring processing unit 260 of any gateway device (GW1, GW3, or GW4) having received the sensor monitoring table 280 from another gateway device (GW2) overwrites the sensor monitoring table 280 stored in the own device with the received sensor monitoring table 280. Accordingly, the contents of the sensor monitoring table 280 are shared among all gateway devices GW. Since the latest sensor monitoring table 280 is shared, the sensor monitoring processing may be performed based on the latest sensor monitoring table 280 when the own device functions as the master gateway device.

As described above in detail, the sensor data processing unit 210 of any gateway device (GW1, GW3, or GW4) according to the present embodiment specifies, when having received sensor data and the sensor ID (identification information) of a sensor having detected the sensor data, sensor data associated with the received sensor ID by referring to the sensor data table 230 storing sensor data acquired by another gateway device (GW2) in association with the sensor ID of a sensor having detected the sensor data, and compares the received sensor data with the specified sensor data. Then, the table processing unit 220 determines whether to transmit the received sensor data based on a result of the comparison. Accordingly, the received sensor data may be determined not to be transmitted based on the comparison result, which leads to reduction of the amount of transmission data.

In the present embodiment, the table processing unit 220 determines the received sensor data to be transmitted when the received sensor data is different from the specified sensor data. Accordingly, the received sensor data is not transmitted when the received sensor data is identical to the specified sensor data, which leads to reduction of the amount of transmission data.

In the present embodiment, when the received sensor data is determined to be transmitted, the table processing unit 220 transmits the received sensor data to another gateway device (GW2). Accordingly, sensor data, the value of which has been changed may be provided to another gateway device (GW2).

In the present embodiment, the table processing unit 220 receives, from another gateway device (GW2), sensor data acquired by the other gateway device (GW2) and the sensor ID of a sensor having detected the sensor data, and stores, in the sensor data table 230, the received sensor data acquired by the other gateway device (GW2) in association with the sensor ID of the sensor having detected the sensor data. Accordingly, the table processing unit 220 may determine whether to transmit received sensor data based on a result of comparison of the received sensor data with sensor data managed by the other gateway device (GW2).

In the present embodiment, the sensor data acquired by the other gateway device (GW2) is sensor data having a latest detection time among sensor data received from any gateway device (GW1, GW3, or GW4). Accordingly, the table processing unit 220 may determine whether to transmit received sensor data based on a result of comparison of the received sensor data with the sensor data having the latest detection time and held in the other gateway device (GW2).

In the sensor network system 100 according to the present embodiment, a plurality of gateway devices (GW1, GW3, and GW4) each receive, from a sensor, sensor data detected by the sensor and transmit, to the gateway device GW2, the received sensor data and the sensor ID of the sensor having detected the sensor data. When having received, from each of the plurality of gateway devices (GW1, GW3, and GW4), sensor data and the sensor ID of a sensor having detected the sensor data, the gateway device GW2 collects the received sensor data in association with the sensor ID of the sensor having detected the received sensor data. When a plurality of pieces of sensor data have identical sensor IDs, the gateway device GW2 determines which sensor data is to be employed among the pieces of sensor data based on the detection time of each sensor data. When a gateway device in charge of transmission of sensor data detected by a sensor is determined for each sensor in advance, the occurrence of failure or the like to a certain gateway device leads to no transmission of sensor data of a sensor that the gateway device is in charge of transmission from, and causes a data loss. However, in the present embodiment, each gateway device (GW1, GW3, or GW4) transmits, to the gateway device GW2, sensor data received by the gateway device and the sensor ID of a sensor having detected the sensor data, and the gateway device GW2 merges the sensor data received from the gateway devices (GW1, GW3, and GW4). Then, when a plurality of pieces of the sensor data have identical sensor IDs, the gateway device GW2 determines which sensor data is to be employed based on the detection time of each sensor data. Accordingly, the occurrence of a data loss may be reduced.

Each above-described processing function may be achieved by a computer. In such a case, a computer program that describes processing contents of any function of a processing device is provided. The computer program is executed by the computer to achieve the above-described processing function on the computer. The computer program that describes the processing contents may be recorded on a computer-readable recording medium (except for carrier wave).

When sold, a computer program is provided, for example, in the format of a portable recording medium such as a digital versatile disc (DVD) or a compact disc read-only memory (CD-ROM), in which the computer program is recorded. Alternatively, the computer program may be stored in a storage device of a server computer and transmitted from the server computer to any other computer through a network.

For example, a computer that executes a computer program stores, in a storage device thereof, a computer program recorded in a portable recording medium or a computer program transmitted from a server computer. Then, the computer reads the computer program from the storage device and executes processing in accordance with the computer program. Alternatively, the computer may directly read a computer program from a portable recording medium and execute processing in accordance with the computer program. Alternatively, at each reception of a computer program from a server computer, the computer may execute processing in accordance with the received computer program.

The above-described embodiment is a preferable example of the present disclosure. However, the disclosure is not limited thereto. Various modifications are possible without departing from the scope of the disclosure.

## Claims

1. A transmission control program that causes a computer to execute a process, the process comprising:
specifying, upon a reception of sensor data and identification information of a sensor having detected the sensor data, sensor data associated with the received identification information of the sensor by referring to a storage device storing sensor data acquired by another information processing device in association with identification information of a sensor having detected the stored sensor data;
comparing the received sensor data with the specified sensor data; and
determining whether to transmit the received sensor data based on a result of the comparing.

2. The transmission control program according to claim 1, wherein
the determining determines to transmit the received sensor data when the received sensor data is different from the specified sensor data.

3. The transmission control program according to claim 2, wherein
the process further comprises:
transmitting the received sensor data to the other information processing device when the received sensor data is determined to be transmitted in the determining.

4. The transmission control program according to any one of claims 1 to 3, wherein
the process further comprises:
receiving, from the other information processing device, sensor data acquired by the other information processing device and identification information of a sensor having detected the sensor data; and
storing, in the storage unit, the received sensor data acquired by the other information processing device and the identification information of the sensor having detected the sensor data in association with each other.

5. The transmission control program according to any one of claims 1 to 4, wherein
the stored sensor data acquired by the other information processing device is sensor data having a latest detection time among pieces of sensor data received from the information processing device.

6. A transmission control method executed by a computer, the transmission control method comprising:
specifying, upon a reception of sensor data and identification information of a sensor having detected the sensor data, sensor data associated with the received identification information of the sensor by referring to a storage device storing sensor data acquired by another information processing device in association with identification information of a sensor having detected the stored sensor data;
comparing the received sensor data with the specified sensor data; and
determining whether to transmit the received sensor data based on a result of the comparing.

7. An information processing device comprising:
a specification unit that specifies, upon a reception of sensor data and identification information of a sensor having detected the sensor data, sensor data associated with the received identification information of the sensor by referring to a storage device storing sensor data acquired by another information processing device in association with identification information of a sensor having detected the stored sensor data;
a comparison unit that compares the received sensor data with the specified sensor data; and
a determination unit that determines whether to transmit the received sensor data based on a result of the comparing.
